# EUROPEAN PATENT SPECIFICATION

(11) **EP 3 210 837 B1**
(45) Date of publication and mention of the grant of the patent: **09.01.2019**
(21) Application number: 16156881.1
(22) Date of filing: 23.02.2016
(51) Int. Cl.: B60R 25/04, B60R 25/045

(54) **ANTI-THEFT DEVICE FOR SUPPLYING A CURRENT TO VEHICLE CIRCUITRY**
DIEBSTAHLSICHERUNGSVORRICHTUNG ZUM VERSORGEN EINES FAHRZEUGNETZES MIT STROM
DISPOSITIF ANTIVOL POUR AMENER UN COURANT À UN CIRCUIT DE VÉHICULE

(43) Date of publication of application: 30.08.2017
(73) Proprietor: Reduce Carbon Energy Develop Co., Ltd., New Taipei City 238 (TW)
(72) Inventor: Chen, FU-CHIEH, 238 New Taipei City (TW)
(74) Representative: Brown, Michael Stanley

(56) References cited:
- EP-A1- 0 636 524
- EP-A1- 0 857 603
- WO-A1-2005/102799
- US-A- 4 553 127
- US-A- 4 740 775

## Description

### BACKGROUND OF THE INVENTION

### (a) Field of the Invention

The present invention relates to vehicle anti-theft, and more specifically to a vehicle anti-theft device control method. When in an anti-theft mode, the vehicle anti-theft device controls the starter battery to only allow a low current output to supply the electric requirements of the vehicle electronic equipment, such as the electronic control unit, vehicle acoustics, and the like, and disables a high current output that would supply and start the vehicle starter motor, thereby preventing the vehicle from being stolen.

### (b) Description of the Prior Art

Taiwan Utility Model Publication No. M416829 discloses an anti-theft lithium power battery, comprising a control device installed on the vehicle's lithium power battery, a remote control unit (2) mounted on the vehicle exterior, and a voice broadcaster mounted on the vehicle interior, wherein the remote control unit (2) is used to control the control device.

The control device is assembled from a circuit board, a battery management system mounted on the circuit board, a security system mounted on the circuit board, and at least one alarm system mounted on the circuit board and electrically connected to the security system.

The security system is assembled from a current control circuit, a vibration switch, and a diagnosis circuit. The current control circuit is used to control whether the lithium power battery outputs electric power or not. The vibration switch is used to activate the alarm system when the vehicle vibrates. The diagnosis circuit is controlled by the remote control unit, and decides whether to activate the current control circuit or not. When the current control circuit is activated and the vehicle driver wants to start the vehicle, or the vibration switch has been activated, the alarm system and the voice broadcaster are activated, and at the same time, the current control circuit continues to be activated until the remote control unit, through the diagnosis circuit, cuts off the current control circuit, the alarm system, and the voice broadcaster.

The abstract of Taiwan Utility Model Publication No. M416829 discloses that the security system consists of a current limiting circuit, and activating the current limiting circuit puts the vehicle in a state whereby current is flowing but the vehicle cannot be started. And when the current limiting circuit is activated, and a high current output is needed to start the vehicle, then the alarm system is activated, and the current limiting device continues to be activated.

However, the description in the specification of Taiwan Utility Model Publication No. M416829 does not describe how the technological measures enable disabling the vehicle from starting when the current limiting circuit is activated. And the vehicle starter battery uses an electrical connection between the current outlet terminals (8) of the battery and the vehicle circuitry system to supply electric energy to the vehicle. The current limiting circuit disclosed in Taiwan Utility Model Publication No. M416829 is able to maintain its function to output a low current for use by the the vehicle's electronic equipment when in an anti-theft mode, indicating that the battery and the vehicle circuitry system are in a closed circuit state enabling a current to flow. However, the battery can also output a high current to the vehicle through the same current circuit, and thus unable to achieve the effect of disabling the vehicle from starting as recorded in the abstract.

Furthermore, vehicle anti-theft devices of the prior art, including that disclosed in Taiwan Utility Model Publication No. M4168295, use a remote control unit (2) or a chip key to perform an unlocking or cancel operation when in an anti-theft mode. However, if the remote control unit (2) or chip key is duplicated by a thief, then the thief is able to use the duplicated remote control unit (2) or chip key to cancel the anti-theft settings and easily drive away the vehicle. Hence, because of the worry that the remote control unit (2) or the chip key has been duplicated, the vehicle owner must visit the supplier and have the anti-theft device installed on the vehicle replaced together with the remote control unit (2) or chip key.

US Patent Specification No. 4,553,127 discloses a vehicle anti-theft device which includes a processor 80', a current control unit 50', a first transmitter 136 and an operator 110. The processor, the current control unit and a signal transmitter are linked to a vehicle starter battery. The processor is electrically connected to the current control unit, the first transmitter, a vehicle electric generator and to battery cells of the starter battery. The processor is used to control activation of the current control unit which is electrically connected to the current output terminals of the starter battery, thereby controlling the current output of the starter battery to the vehicle circuitry system. The current control unit comprises a large current circuit 60' and a small current circuit 70' connected in parallel with one another. The large current circuit is provided with a single-pole relay 62', and the small current circuit 70' is a current limiting circuit thereby enabling the starter battery to supply a low current to the vehicle circuitry system. The processor controls activation of the single-pole relay and the small current circuit, thereby controlling the strength of the output current of the starter battery to the vehicle circuitry system. The operator 110 is a hand-held communication device and includes a second transmitter 134. The processor 80' and the operator 110 use a wireless connection between the first transmitter and the second transmitter to enable the operator to control the processor, which is further provided with a password storage and verification unit. The processor 80' executes password setting/storage/change/verification operations and anti-theft lockout/unlock operations.

It is an object of the present invention to provide an improved method of operating a vehicle anti-theft device.

### SUMMARY OF THE INVENTION

According to the present invention there is provided a method of operating a vehicle anti-theft device as claimed herein.

To enable a further understanding of said objectives and the technological methods of the invention herein, a brief description of the drawings is provided below followed by a detailed description of the preferred embodiment.

### BRIEF DESCRIPTION OF THE DRAWINGS

Figure 1 is a circuit diagram of a processor (1) and a current control unit (2) of a vehicle anti-theft device,
Figure 2 is a logic block diagram of password verification of the vehicle anti-theft device, and
Figure 3 is a logic block diagram of output current control of the vehicle anti-theft device.

### DETAILED DESCRIPTION OF THE PREFERRED EMBODIMENT

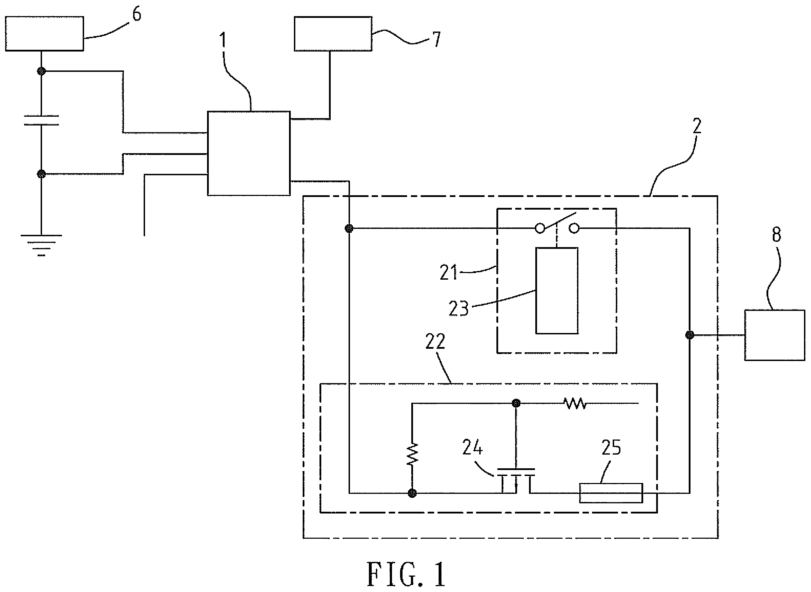

As shown in FIG. 1, which shows an embodiment of a vehicle anti-theft device comprising a processor (1), a current control unit (2), a first bluetooth transmitter (not shown), and an operator (not shown), wherein the processor (1), the current control unit (2), and a signal transmitter are mounted on a circuit board (not shown). The circuit board is mounted in the interior of a vehicle starter battery. The processor (1) is electrically connected to the current control unit (2), the first bluetooth transmitter, a vehicle electric generator (6), and battery cells (7) of a starter battery. The processor (1) is an integrated circuit, which is used to control operation of the current control unit (2). The current control unit (2) is electrically connected to current outlet terminals (8) of the starter battery, thereby controlling the starter battery to output current to the vehicle circuitry system. The current control unit (2) comprises a large current circuit (21) and a small current circuit (22). The large current circuit (21) is connected in parallel to the small current circuit (22). The large current circuit (21) is provided with a single-pole relay (23), and the small current circuit (22) is a current limiting circuit, thereby enabling the starter battery to supply a low current to the vehicle circuitry system. The small current circuit (22) comprises a self-resetting fuse (24), and the processor (1) controls the opening and closing activation of the single-pole relay (23) and the self-resetting fuse (24), thereby controlling the strength of the output current of the starter battery to the vehicle circuitry system.

In addition, the small current circuit (22) may selectively comprise a low current circuit breaker (25). The low current circuit breaker (25) is a small-scale circuit breaker (such as a relay) that controls a closed-open circuit state of the small current circuit (22). The processor (1) controls activation of the low current circuit breaker (25) in an unlocked state to enable closing and opening of the small current circuit (22). The processor (1) also controls activation of the low current circuit breaker (25) in an anti-theft lockout state to enable the small current circuit (22) to form a closed circuit. Moreover, under circumstances whereby the small current circuit (22) forms a closed circuit, the processor (1) controls activation of the low current circuit breaker (25) when the output voltage of the battery cells (7) is below a specified safety voltage to enable closing and opening of the small current circuit (22).

The operator is a hand-held communication device, and may be a smart phone, but is not limited to the smart phone. The operator comprises a second bluetooth transmitter, moreover, the operator has a built-in application program. The processor (1) and the operator use a wireless connection between the first bluetooth transmitter and the second bluetooth transmitter to enable information to be transmitted between the processor (1) and the operator. Moreover, the operator executes the aforementioned application program to control the processor (1).

When the user operates the operator to execute the aforementioned application program, the user inputs a personalized set password, whereupon the password information is transmitted to the first bluetooth transmitter via the second bluetooth transmitter. The first bluetooth transmitter receives the password information and transmits the password information to the processor (1). The processor (1) is further provided with a password storage and verification unit. When the vehicle anti-theft device is in an unlocked state, the aforementioned application program enables the processor (1) to execute password setting/storage/change/verification operations and an anti-theft lockout operation. With the vehicle anti-theft device in an anti-theft lockout state, the aforementioned application program enables the processor (1) to execute password verification and unlocking operations.

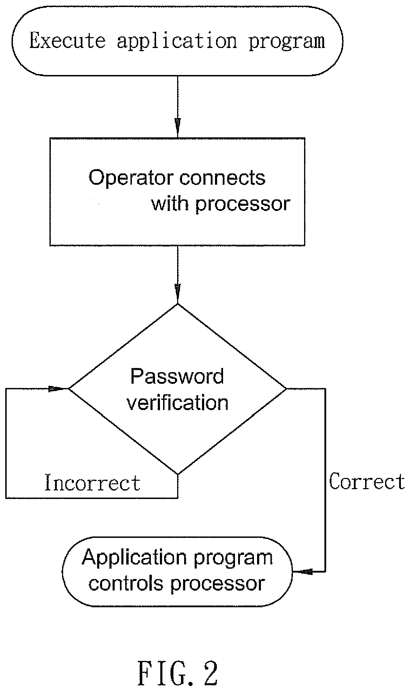

Referring to FIG. 1 and FIG. 2, in a wireless connected state between the first bluetooth transmitter and the second bluetooth transmitter, when the user operates the operator to execute the aforementioned application program, the application program transmits the password information to the processor (1), whereupon the processor (1) executes password verification. When the password information corresponds with the user preset and stored password, then the user can operate the aforementioned application program to carry out a password changing operation or the operation to change the anti-theft lockout/unlocked state. When the password information does not correspond with the user preset and stored password, the user is unable to operate the aforementioned application program to carry out the password changing operation or the operation to change the anti-theft lockout/unlocked state. Moreover, because the password information was not verified, the processor (1) repeats execution of the password verification operation.

When the password transmitted by the aforementioned application program is verified to correspond with the preset password by the processor (1), then the operation to change the anti-theft lockout/unlocked state may be carried out.

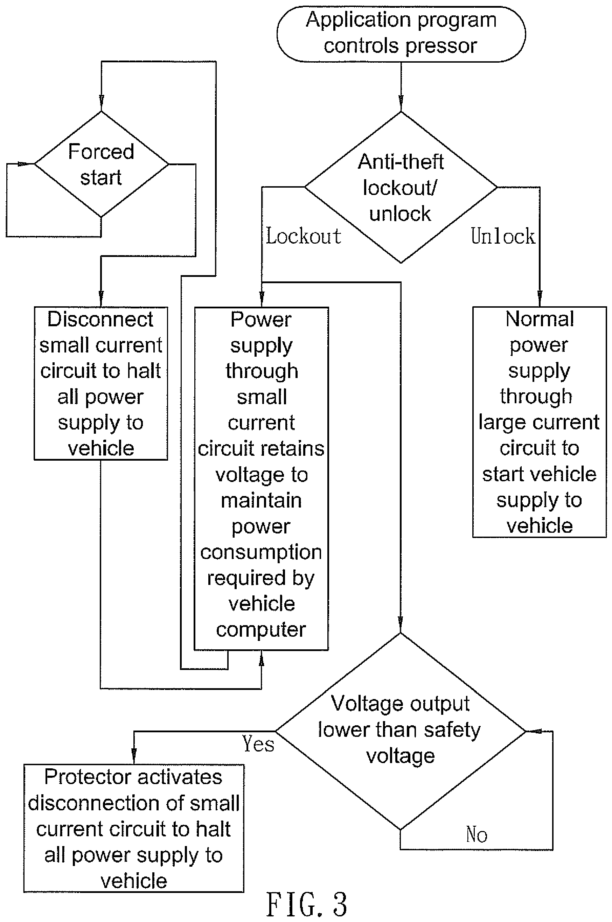

Referring to FIG. 1 and FIG. 3, a control method for supplying a current to the vehicle circuitry system using the aforementioned embodiment to implement is as follows:
1. The aforementioned application program controls the processor (1) to carry out unlocking, and the low current circuit breaker (25) activates disconnection of the small current circuit (22). The single-pole relay (23) then activates the large current circuit (21) to form a closed circuit, thereby enabling the starter battery to output a high current or a low current to the vehicle circuitry system through the large current circuit (21), thus enabling the vehicle starter motor to start, and the vehicle electronic equipment, such as the electronic control unit, vehicle acoustics, and the like, also obtain a low current to enable operation thereof.
2. The aforementioned application program controls the processor (1) to carry out anti-theft lockout, and the low current circuit breaker (25) activates the small current circuit (22) to form a closed circuit and disconnection of the single-pole relay (23), thereby causing the large current circuit (21) to form a broken circuit. The starter battery is thus unable to output a high current to the vehicle circuitry system through the large current circuit (21), thus disabling the starter motor from starting, and the self-resetting fuse (24) is not activated. The small current circuit (22) maintains a closed circuit, and the starter battery is only able to output a low current to the vehicle circuitry system through the small current circuit (22), thereby avoiding having to return the vehicle to the supplier to reset the setup parameters of the vehicle electronic equipment, such as the electronic control unit, vehicle acoustics, and the like, because of shortage of power supply for a long period of time.
3. Based on the processor (1) executing anti-theft lockout, if a high current flows to the small current circuit (22), then the self-resetting fuse (24) disconnects the circuit and the starter battery is unable to output a current to the vehicle circuitry system. Accordingly, the vehicle starter motor can not be started by operating the start switch and the vehicle engine cannot be started, thereby preventing the vehicle from being stolen. The self-resetting fuse (24) self-resets within a short period of time of approximately a few seconds after disconnection thereof, which enables the small current circuit (22) to return to a closed circuit state. Accordingly, the starter battery can again output a low current to the vehicle circuitry system through the small current circuit (22) to satisfy the electric requirements of the vehicle electronic equipment, such as the electronic control unit, vehicle acoustics, and the like. In addition, the self-resetting fuse (24) is completely reset within a short period of a few seconds after disconnection, thereby preventing loss of setup parameters stored in memory of the vehicle electronic equipment, such as the electronic control unit, vehicle acoustics, and the like.

It is worth mentioning that the present invention uses verification of the personalized password set by the user to serve as a basis to determine whether or not to execute anti-theft lockout and unlock operations. Even if the operator is misplaced or lost, the user can use another operator with the aforementioned built-in application program to carry out the password changing operation, thereby avoiding the need to replace the vehicle anti-theft device when the operator is misplaced or lost, or because of the fraudulent practice of duplicating the remote control unit or chip key of vehicle anti-theft devices of the prior art.

Furthermore, there is no need for the user to specially purchase an operator, and can use communication equipment such as their own cell phone, and the like, to download the aforementioned application program from a cloud server through the Internet and install the program in the communication equipment. The aforementioned communication equipment can then be used as the operator to operate the processor (1).

Based on the prerequisite that the processor (1) executes anti-theft unlocking, the processor (1) controls activation of the low current circuit breaker (25) to enable disconnection of the small current circuit (22), thereby disabling the battery cells (7) from supplying electric energy to the current outlet terminals (8) through the small current circuit (22), and enabling the battery cells (7) to supply a high current or a low current to the current outlet terminals (8) through the large current circuit (21). Furthermore, based on the prerequisite that the processor (1) executes anti-theft lockout, the processor (1) controls activation of the low current circuit breaker (25) to enable the small current circuit (22) to form a closed circuit, thereby enabling the battery cells (7) to supply a low current to the current outlet terminals (8) through the small current circuit (22).

Based on the prerequisite that the processor (1) executes anti-theft lockout, when the output voltage of the battery cells (7) is below a specified safety voltage, then the processor (1) controls activation of the low current circuit breaker (25) to enable disconnection of the small current circuit (22), which disables the battery cells (7) from supplying electric energy to the current outlet terminals (8) through the small current circuit (22). The aforementioned safety voltage differs according to vehicle model and class, wherein the safety voltage value of a general small car is 12.3V; the safety voltage value of a heavy duty vehicle or passenger car is 24V; and the safety voltage value of a motorbike is 6.8V.

Accordingly, when problems of electric leakage occur in the vehicle circuitry system, or the user neglects to switch off the vehicle headlights, or under other conditions which can result in abnormal electric leakage of the cumulative electric energy of the battery cells (7), then the battery cells (7) can use the disconnection action of the low current circuit breaker (25) to enable the battery cells (7) to retain sufficient electric energy to supply the vehicle starter motor with the electric power required to execute a primary start thereof. Hence, a low voltage protection is formed that enables the user to start the vehicle engine after anti-theft unlocking, thereby facilitating the user to drive the vehicle to a vehicle service depot to overhaul the engine.

The processor (1) is further provided with a testing circuit, which is used to test various types of battery data of the battery cells (7), including the output voltage, output current, temperature, capacity, and the number of times the battery cells (7) has been charged and discharged. In a wireless connected state between the first bluetooth transmitter and the second bluetooth transmitter, and when the password transmitted by the aforementioned application program is verified correct by the processor (1), then the processor (1) transmits the aforementioned battery data to the operator, thereby enabling the user to learn the state of the starter battery. The aforementioned application program also transmits the aforementioned battery data to the server of the starter battery manufacturer or service provider through the Internet for use to provide services to the user, wherein the aforementioned server is able to transmit a warning message to the operator when there are anomalies in the battery data, thereby enabling the user to promptly carry out maintenance or replacement of the starter battery.

## Claims

1. A method of operating a vehicle anti-theft device, wherein the vehicle anti-theft device implements a control method for supplying current to the vehicle circuitry, and based on the wireless connection between a first transmitter and a second transmitter,
the method including the use of an application program which transmits password information to a processor (1), whereupon the processor (1) executes password verification;
wherein the password information corresponds with the set password and the application program enables executing a password changing operation or the operation to change the anti-theft lockout/unlocked state; and wherein, when the password information does not correspond with the set password, then the processor (1) repeats execution of the password verification operation;
wherein, when the processor (1) executes unlocking, then a low current circuit breaker (25) activates disconnection of a small current circuit (22), and the single-pole relay (23) activates a large current circuit (21) to form a closed circuit, thereby enabling the starter battery to output a high current or a low current to the vehicle circuitry system through the large current circuit (21);
wherein the processor (1) executes anti-theft lockout, then the low current circuit breaker (25) activates the small current circuit (22) to form a closed circuit, and the single-pole relay (23) disconnects the large current circuit (21) to form a broken circuit, thereby enabling the starter battery to output a low current to the vehicle circuitry system through the small current circuit (22);
based on the processor (1) executing anti-theft lockout, a high current flows to the small current circuit (22), then a self-resetting fuse (24) is disconnected, thereby preventing the vehicle engine from being started; the self-resetting fuse (24) self-resets after disconnection, and the small current circuit (22) returns to forming a closed circuit, thereby enabling the starter battery to output a low current to the vehicle circuitry system.

## Patentansprüche

1. Verfahren zum Betreiben einer Fahrzeug-Diebstahlschutzvorrichtung, wobei die Fahrzeug-Diebstahlschutzvorrichtung ein Steuerungsverfahren zum Liefern von Strom an den Fahrzeugkreis implementiert und auf der kabellosen Verbindung zwischen einem ersten Sender und einem zweiten Sender basiert,
wobei das Verfahren die Nutzung eines Anwendungsprogramms beinhaltet, das Passwortinformationen an einen Prozessor (1) überträgt, wobei der Prozessor (1) eine Passwortverifizierung ausführt;
wobei die Passwortinformationen mit dem eingerichteten Passwort korrespondieren und das Anwendungsprogramm die Ausführung eines Passwortänderungsvorgangs oder des Vorgangs zur Änderung der Diebstahlschutzsperre/des ungesperrten Zustands ermöglicht;
und wobei dann, wenn die Passwortinformationen nicht mit dem eingerichteten Passwort korrespondieren, der Prozessor (1) die Ausführung des Passwort-Verifizierungsvorgangs wiederholt;
wobei dann, wenn der Prozessor (1) ein Entsperren ausführt, ein Schwachstromkreisunterbrecher (25) die Trennung eines kleinen Stromkreises (22) aktiviert, und das einpolige Relais (23) aktiviert einen großen Stromkreis (21), um einen geschlossenen Kreis zu bilden, wobei die Anlasserbatterie in die Lage versetzt wird, durch den großen Stromkreis (21) einen Starkstrom oder einen Schwachstrom an das Fahrzeugkreissystem auszugeben;
wobei der Prozessor (1) eine Diebstahlschutzverriegelung ausführt, dann der Schwachstromkreisunterbrecher (25) den kleinen Stromkreis (22) aktiviert, um einen geschlossenen Kreis zu bilden, und das einpolige Relais (23) den großen Stromkreis (21) trennt, um einen unterbrochenen Kreis zu bilden, wobei die Anlasserbatterie in die Lage versetzt wird, durch den kleinen Stromkreis (22) einen Schwachstrom an das Fahrzeugkreissystem auszugeben;
basierend darauf, dass der Prozessor (1) eine Diebstahlschutzverriegelung ausführt, durch den kleinen Stromkreis (22) ein Starkstrom fließt, dann eine sich selbst zurücksetzende Sicherung (24) getrennt wird, wodurch ein Anlassen des Fahrzeugmotors verhindert wird; die sich selbst zurücksetzende Sicherung (24) sich nach dem Trennen selbst zurück setzt, und der kleine Stromkreis (22) dazu zurück kehrt, einen geschlossenen Kreis zu bilden, wodurch der Anlasserbatterie ermöglicht wird, an das Fahrzeugkreissystem einen Schwachstrom auszugeben.

## Revendications

1. Procédé de fonctionnement d'un dispositif antivol de véhicule, le dispositif antivol de véhicule mettant en oeuvre un procédé de contrôle pour fournir un courant à la circuiterie du véhicule, et sur la base de la connexion sans fil entre un premier émetteur et un second émetteur,
le procédé comprenant l'utilisation d'un programme d'application qui transmet une information de mot de passe à un processeur (1), le processeur (1) exécutant alors une vérification de mot de passe ;
quand l'information de mot de passe correspond au mot de passe défini, le programme d'application autorise l'exécution d'une opération de changement de mot de passe ou de l'opération de changement de l'état verrouillé/déverrouillé de l'antivol ; et quand l'information de mot de passe ne correspond pas au mot de passe défini, alors le processeur (1) répète l'exécution de l'opération de vérification de mot de passe ;
quand le processeur (1) exécute un déverrouillage, alors un disjoncteur à bas courant (25) active une déconnexion d'un circuit à bas courant (22), et le relais unipolaire (23) active un circuit à haut courant (21) pour former un circuit fermé, de manière à permettre à la batterie du démarreur d'émettre un haut courant ou un bas courant vers le système de circuiterie du véhicule par l'intermédiaire du circuit à haut courant (21) ;
quand le processeur (1) exécute un verrouillage antivol, alors le disjoncteur à bas courant (25) active le circuit à bas courant (22) pour former un circuit fermé, et le relais unipolaire (23) déconnecte le circuit à haut courant (21) pour former un circuit ouvert, de manière à permettre à la batterie du démarreur d'émettre un bas courant vers le système de circuiterie du véhicule par l'intermédiaire du circuit à bas courant (22) ;
sur la base du processeur (1) exécutant un verrouillage antivol, un haut courant circule vers le circuit à bas courant (22), puis un fusible à réenclenchement automatique (24) est déconnecté, de manière à empêcher le démarrage du moteur du véhicule ; le fusible à réenclenchement automatique (24) se réenclenche automatiquement après la déconnexion, et le circuit à bas courant (22) reforme un circuit fermé, de manière à permettre à la batterie du démarreur d'émettre un bas courant vers le système de circuiterie du véhicules.
